# EUROPEAN PATENT APPLICATION

(11) **EP 3 461 185 A1**
(43) Date of publication of application: **27.03.2019**
(21) Application number: 16906760.0
(22) Date of filing: 30.06.2016
(51) Int. Cl.: H04W 48/18

(54) **NETWORK DEVICE, TERMINAL DEVICE, MULTICAST SERVICE CONFIGURATION METHOD AND RECEIVING METHOD**

(71) Applicant: Huawei Technologies Co., Ltd., Longgang District Shenzhen, Guangdong 518129 (CN)
(72) Inventor: LI, Bingzhao, Shenzhen Guangdong 518129 (CN); QUAN, Wei, Shenzhen Guangdong 518129 (CN); GAO, Yongqiang, Shenzhen Guangdong 518129 (CN); ZHANG, Jian, Shenzhen Guangdong 518129 (CN)
(74) Representative: Gill Jennings & Every LLP
(86) International application number: PCT/CN2016/087980
(87) International publication number: WO 2018/000360

(57) **Abstract**

This application provides a network device, a terminal device, a multicast service configuration method, and a multicast service receiving method, to improve quality of receiving a multicast service by the terminal device. The terminal device includes: a receiving module, configured to receive first configuration information used to send a multicast service in a first cell, and second configuration information used to send the multicast service in each second cell in a second cell set; and a processing module, configured to select a second cell from the second cell set. The receiving module is further configured to: for same data content of the multicast service, receive a data packet of the multicast service from the first cell based on the first configuration information, and receive a data packet of the multicast service from the selected second cell based on the second configuration information. The processing module is further configured to combine the data packets of the same data content of the multicast service. The terminal device may learn of configurations of the multicast service in a current cell and another cell, and then receive a same multicast service from a plurality of cells, thereby improving communication quality of the multicast service.

## Description

### TECHNICAL FIELD

This application relates to the field of wireless communications technologies, and in particular, to a network device, a terminal device, a multicast service configuration method, and a multicast service receiving method.

### BACKGROUND

Single Cell Point To Multipoint (Single Cell Point To Multipoint, SC-PTM) is a multicast service transmission technology.

During transmission of a multicast service by using the SC-PTM technology, a base station independently schedules different cells, and a terminal device in a cell receives only a data packet of the multicast service sent by the base station in the cell. When communication quality of the terminal device in the cell (for example, located at an edge of the cell) is relatively poor, receiving quality of the multicast service is relatively low.

### SUMMARY

Embodiments of this application provide a network device, a terminal device, a multicast service configuration method, and a multicast service receiving method, to improve quality of receiving a multicast service by the terminal device.

According to a first aspect, a multicast service configuration method is provided, including:
sending, by an access network device, the first configuration information in a first cell; and sending, in the first cell, the second configuration information corresponding to each second cell in a second cell set, where the first configuration information includes configuration information used to send a multicast service in the first cell, and the second configuration information includes configuration information used to send the multicast service in the second cell; and
receiving, by a terminal device in the first cell, the first configuration information and the second configuration information corresponding to each second cell in the second cell set; selecting, from the second cell set, a second cell from which the multicast service is to be received; for same data content of the multicast service, receiving a data packet of the multicast service from the first cell based on the first configuration information, and receiving, from the corresponding selected second cell from which the multicast service is to be received, a data packet of the multicast service based on the second configuration information; and combining the received data packets of the same data content of the multicast service.

The access network device not only sends, in the first cell, the configuration information used to send the multicast service in the first cell, but also sends, in the first cell, the configuration information used to send the multicast service in each second cell in the second cell set. In this way, the terminal device in the first cell may obtain the configuration information used to send the multicast service in the first cell and the configuration information used to send the multicast service in each second cell, so that the terminal device can receive data packets of the multicast service that are sent from a plurality of cells. When the data packets of the same data content of the multicast service are combined, a combining gain may be obtained, and receiving quality of the multicast service is improved.

In an optional implementation, when receiving the data packet of the multicast service, for the same data content of the multicast service, the terminal device may receive the data packet of the multicast service from the first cell based on the first configuration information; and/or receive, from the corresponding selected second cell from which the multicast service is to be received, the data packet of the multicast service based on the second configuration information.

The terminal device may receive the multicast service in different flexible manners.

Specifically, the terminal device may receive the data packet of the multicast service from the first cell for the same data content of the multicast service based on the first configuration information, and the terminal device decodes the data packet that is of the multicast service and that is received from the first cell. If the data packet is successfully decoded, the terminal device stops receiving the data packet of the multicast service from the corresponding selected second cell from which the multicast service is to be received.

In this way, unnecessary receiving operations can be minimized, thereby reducing processing load of the terminal device.

Optionally, if the terminal device fails to decode the data packet that is of the multicast service and that is received from the first cell, the terminal device receives the data packet of the multicast service from the selected second cell from which the multicast service is to be received.

Alternatively, the terminal device receives a data packet of the multicast service from a third cell for the same data content of the multicast service, where the third cell is a cell that first sends the data packet of the same data content and that is in the first cell and the second cell, selected by the terminal device, from which the multicast service is to be received. The terminal device decodes the data packet that is of the multicast service and that is received from the third cell, and if the data packet is successfully decoded, the terminal device stops receiving a data packet of the multicast service from another cell, where the another cell is at least one cell in a plurality of cells including the first cell and the cell in the second cell set and excluding the third cell.

In this optional implementation, receiving of the data packet of the multicast service can be completed as soon as possible. In addition, when the data packet is successfully decoded, unnecessary receiving operations of the terminal device can be minimized, thereby reducing the processing load of the terminal device.

Optionally, if the terminal device fails to decode the data packet that is of the multicast service and that is received from the third cell, the terminal device receives the data packet of the multicast service from the another cell.

In an optional implementation, the first configuration information includes a first scheduling identifier of the multicast service, and the first scheduling identifier is sent after being placed in scheduling information when the multicast service is scheduled in the first cell, and is used by the terminal device in the first cell to learn that the multicast service is scheduled in the first cell; and the second configuration information includes a second scheduling identifier of the multicast service, and the second scheduling identifier is sent after being placed in scheduling information when the multicast service is scheduled in the second cell, and is used by the terminal device in the first cell to learn that the multicast service is scheduled in the second cell.

The terminal device receives scheduling information from the first cell; when the scheduling information from the first cell includes the first scheduling identifier, the terminal device learns that the multicast service is scheduled in the first cell; and the terminal device receives the data packet of the multicast service from the first cell based on the scheduling information from the first cell. The terminal device receives scheduling information from the second cell; when the scheduling information from the second cell includes the second scheduling identifier, the terminal device learns that the multicast service is scheduled in the second cell; and the terminal device receives the data packet of the multicast service from the second cell based on the scheduling information from the second cell.

In this way, the terminal device may separately learn, based on identifier information of the multicast service, that the multicast service is scheduled in the first cell and the second cell, and separately receives the data packets of the multicast service from the first cell and the second cell based on the scheduling information.

Further, the first configuration information further includes a discontinuous reception DRX parameter used to send the multicast service in the first cell, and the terminal device discontinuously receives the data packet of the multicast service from the first cell based on the DRX parameter used to send the multicast service in the first cell; and/or the second configuration information further includes a DRX parameter used to send the multicast service in the second cell, and the terminal device discontinuously receives the data packet of the multicast service from the second cell based on the DRX parameter used to send the multicast service in the second cell.

When the multicast service is discontinuously sent, the terminal device may receive the data packet of the multicast service based on the discontinuous reception DRX parameter.

In an optional implementation, the access network device sends offset information of the multicast service for at least one second cell in the second cell set, and the offset information is used to describe a time deviation between a moment of sending the multicast service in the second cell and a moment of sending the multicast service in the first cell.

In this way, the terminal device may determine, based on the offset information, data packets of the same content from data packets of the multicast service that are from different cells, and then may combine the data packets.

In an optional implementation, a multicast service configuration device determines block length information of the multicast service, where the block length information is used to describe a length of a transport block used to send the multicast service on an air interface, and the multicast service configuration device sends the block length information to the access network device. When the multicast service is sent in the first cell and in each second cell in the second cell set, a length of each transport block is the length of the transport block described in the block length information.

Configuration performed by the multicast service configuration device can ensure that lengths of transport blocks for transmitting the multicast service in different cells are equal, so that data packets can be combined.

In an optional implementation, the terminal device measures signals received from some or all second cells in the second cell set, and the terminal device selects, from the second cell set based on a measurement result, the second cell from which the multicast service is to be received.

In this way, the terminal device can select, based on measurement results of the received signals, the second cell from which the multicast service is to be received, thereby ensuring receiving quality of the multicast service.

In an optional implementation, the access network device sends, in the first cell, information used to indicate a receiving threshold of the multicast service, and the receiving threshold of the multicast service is used by the terminal device in the first cell to select, from the second cell set, the second cell from which the multicast service is to be received.

In this way, the terminal device may select, from the second cell set based on the receiving threshold, a cell with relatively high communication quality to receive the multicast service from the cell.

In an optional implementation, the terminal device performs a HARQ combination on the received data packets of the same data content of the multicast service, or the terminal device selects, from the received data packets of the same data content of the multicast service, a data packet that is successfully decoded.

In an optional implementation, the terminal device determines that data packets simultaneously sent in the first cell and in the cell in the second cell set are data packets sent for same data content.

According to a second aspect, a terminal device is provided, and the terminal device has a function of implementing terminal device behavior in the method in the first aspect. The function may be implemented by hardware, or may be implemented by hardware by executing corresponding software. The hardware or software includes one or more modules corresponding to the foregoing function.

In an optional implementation solution, a structure of the terminal device includes a processor and a receiver. The processor is configured to support the terminal device in performing the corresponding function in the foregoing method in the first aspect. The receiver is configured to receive configuration information and a data packet of a multicast service by the terminal device. The terminal device may further include a memory. The memory is coupled with the processor, and the memory stores a program instruction and data that are necessary for the terminal device.

According to a third aspect, an access network device is provided, and the access network device has a function of implementing access network device behavior in the method in the first aspect. The function may be implemented by hardware, or may be implemented by hardware by executing corresponding software. The hardware or software includes one or more modules corresponding to the foregoing function.

In an optional implementation solution, a structure of the access network device includes a processor and a transmitter. The processor is configured to support the access network device in performing the corresponding function in the foregoing method in the first aspect. The transmitter is configured to send configuration information and a data packet of a multicast service by the access network device. The access network device may further include a memory. The memory is coupled with the processor, and the memory stores a program instruction and data that are necessary for the access network device.

According to a fourth aspect, a multicast service configuration device is provided, and the multicast service configuration device has a function of implementing multicast service configuration device behavior in the method in the first aspect. The function may be implemented by hardware, or may be implemented by hardware by executing corresponding software. The hardware or software includes one or more modules corresponding to the foregoing function.

In an optional implementation solution, a structure of the multicast service configuration device includes a processor and a transmitter. The processor is configured to support the multicast service configuration device in performing the corresponding function in the foregoing method in the first aspect. The transmitter is configured to send block length information by the multicast service configuration device. The multicast service configuration device may further include a memory. The memory is coupled with the processor, and the memory stores a program instruction and data that are necessary for the multicast service configuration device.

According to a fifth aspect, a wireless communications system is provided, and the wireless communications system includes the foregoing terminal device and access network device in the first aspect, and optionally, may further include the multicast service configuration device.

According to a sixth aspect, a computer storage medium is provided, configured to store a computer software instruction used by the foregoing terminal device in the first aspect. The computer software instruction includes a program used to execute the foregoing aspect.

According to a seventh aspect, a computer storage medium is provided, configured to store a computer software instruction used by the foregoing access network device in the first aspect. The computer software instruction includes a program used to execute the foregoing aspect.

According to an eighth aspect, a computer storage medium is provided, configured to store a computer software instruction used by the foregoing multicast service configuration device in the first aspect. The computer software instruction includes a program used to execute the foregoing aspect.

### BRIEF DESCRIPTION OF DRAWINGS

FIG. 1 is a schematic diagram of transmitting a multicast service by using an SC-PTM technology;
FIG. 2 is a schematic diagram of sending data and control information of a multicast service by using an SC-PTM technology;
FIG. 3 is a schematic structural diagram of a wireless communications system according to an embodiment of this application;
FIG. 4 is a flowchart of multicast service configuration and transmission according to an embodiment of this application;
FIG. 5 shows an example of a wireless communications system according to an embodiment of this application;
FIG. 6 is a schematic diagram of receiving, by user equipment (User Equipment, UE), data packets of a multicast service at boundaries of a plurality of cells according to an embodiment of this application;
FIG. 7 is a flowchart of multicast service configuration and transmission in a scenario shown in FIG. 6;
FIG. 8 is a schematic diagram of a hybrid automatic repeat request (Hybrid Automatic Repeat Request, HARQ) combination;
FIG. 9 is a schematic structural diagram of an access network device according to an embodiment of this application;
FIG. 10 is a schematic structural diagram of a multicast service configuration device according to an embodiment of this application; and
FIG. 11 is a schematic structural diagram of a terminal device according to an embodiment of this application.

### DESCRIPTION OF EMBODIMENTS

To make the objectives, technical solutions, and advantages of the embodiments of this application more understandable, the following provides detailed descriptions. The detailed descriptions provide various implementations of an apparatus and/or a method by using block diagrams, flowcharts, and/or examples. These block diagrams, flowcharts, and/or examples include one or more functions and/or operations. Persons in the art may understand that each function and/or operation in the block diagrams, the flowcharts, and/or the examples can be performed independently and/or jointly by using various hardware, software, and firmware, and/or any combination thereof.

For ease of understanding the embodiments of this application, implementation of a current SC-PTM technology is first described.

First, a base station assigns a group-radio network temporary identifier (Group-Radio Network Temporary Identifier, G-RNTI) to each cell in which multicast service data transmission is performed, and notifies a terminal device of a correspondence between a multicast service and a G-RNTI in advance.

During transmission of a multicast service, the base station adds, to scheduling information, a G-RNTI corresponding to the transmitted multicast service, and the terminal device determines, based on the G-RNTI in the received scheduling information, that the multicast service is scheduled, and receives a data packet of the multicast service based on the scheduling information.

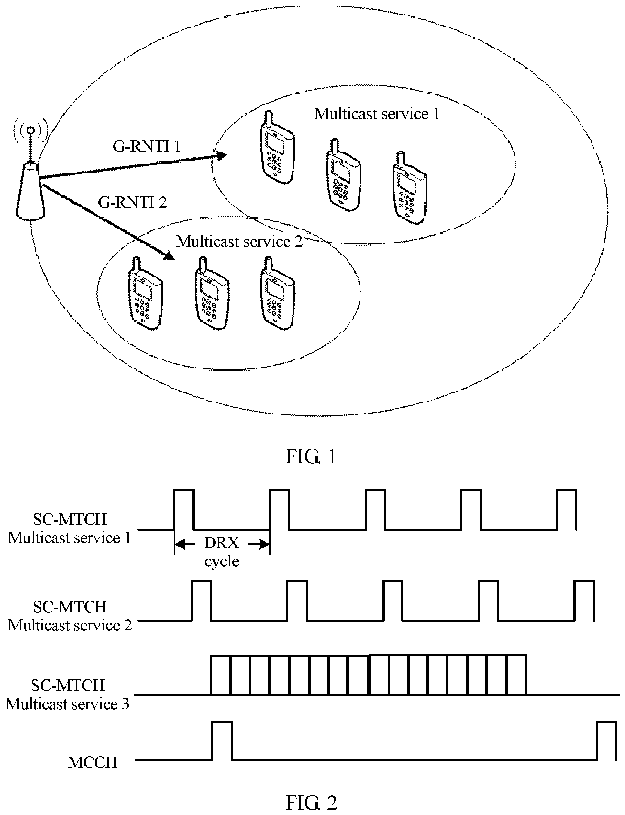

FIG. 1 shows a scenario in which a base station simultaneously transmits two multicast services. The base station assigns a G-RNTI 1 to a multicast service 1, and assigns a G-RNTI 2 to a multicast service 2. When received scheduling information includes the G-RNTI 1, a terminal device determines that the multicast service 1 is scheduled, and receives a data packet of the multicast service 1 based on the received scheduling information. When the received scheduling information includes the G-RNTI 2, the terminal device determines that the multicast service 2 is scheduled, and receives a data packet of the multicast service 2 based on the received scheduling information.

The base station sends the data packet of the multicast service on a physical downlink shared channel (Physical Downlink Shared Channel, PDSCH). Different from a PDSCH that carries data of a unicast service, a PDSCH that carries a multicast service is referred to as a multicast PDSCH.

In addition, the base station sends scheduling information of the multicast service on a physical downlink control channel (Physical Downlink Control Channel, PDCCH), in other words, downlink control information (Downlink Control Information, DCI). The UE receives a multicast PDSCH based on the scheduling information included in the DCI.

In multicast service data transmission performed by using an SC-PTM technology, the base station may configure a DCI format as a DCI format (Format) 1A, and the DCI format 1A is used for assigning consecutive resource blocks (Resource Block, RB).

In the SC-PTM technology, two logical channels are introduced. As shown in FIG. 2, the two logical channels are a single cell-multimedia broadcast multicast service control channel (Single Cell-Multimedia Broadcast Multicast Service Control Channel, SC-MCCH) and a single cell-broadcast multicast service traffic channel (Single Cell-Multimedia Broadcast Multicast Service Channel, SC-MTCH).

The SC-MCCH is used to send control information, including configuration information of the SC-MTCH, for example, a G-RNTI and a discontinuous reception (Discontinuous Reception, DRX) parameter that are corresponding to the SC-MTCH. The SC-MCCH is used to periodically send control information.

The SC-MTCH is used to transmit a data packet of a multicast service, and each multicast service is corresponding to one SC-MTCH channel. The SC-MTCH may be configured to perform continuous transmission, for example, a multicast service 3 in FIG. 2, or may be configured to perform discontinuous transmission, for example, the multicast service 1 and the multicast service 2 in FIG. 2. In FIG. 2, for the SC-MTCH, a most significant bit indicates that data of a multicast service is sent, and a least significant bit indicates that no data packet of a multicast service is sent. For the SC-MCCH, a most significant bit indicates that control information of a multicast service is sent, and a least significant bit indicates that no control information of a multicast service is sent.

The embodiments of this application may be improved based on the current SC-PTM technology, or may be applied to a wireless communications system of another transmission multicast service.

A wireless communications system to which the embodiments of this application may be applied to is described below.

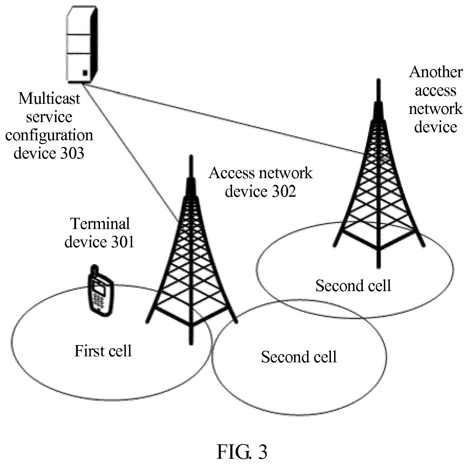

As shown in FIG. 3, the wireless communications system may include a terminal device 301, an access network device 302, and a multicast service configuration device 303.

The terminal device 301 is located within coverage of the access network device 302, and may receive a data packet of a multicast service from the access network device 302.

At least one cell is under the coverage of the access network device 302. The at least one cell includes a first cell, and may further include another cell. Alternatively, the first cell may be a cell out of the access network device 302. The access network device 302 may control a device, such as a base station to which the first cell belongs, to send configuration information used to send a multicast service in a first cell, and send configuration information used to send the multicast service in a second cell.

The terminal device 301 is located in the first cell. At least one second cell exists around the first cell. The second cells constitute a second cell set, and the second cell may belong to the access network device 302, or may belong to another access network device.

The second cell may be configured as a neighboring cell of the first cell. For example, data configuration is performed by using a network device such as the access network device 302, to configure the second cell as a neighboring cell of the first cell. The second cell may not be configured as a neighboring cell of the first cell. Regardless of whether the second cell is configured as a neighboring cell of the first cell, the terminal device 301 may receive data packets of the multicast service from the second cell for combination, provided that signal quality of the multicast service received by the terminal device 301 from the second cell is good enough.

The multicast service configuration device 303 is configured to deliver some configuration information of the multicast service. The multicast service configuration device 303 may be connected to one or more access network devices, and separately deliver configuration information of the multicast service to the access network devices, so that the access network device performs multicast service transmission in a cell of the access network device based on the configuration information. For example, the multicast service configuration device 303 may be a multi-cell/multicast coordination entity (Multi-cell/multicast Coordination Entity, MCE).

Certainly, the wireless communications system may further include another terminal device. However, for simplicity of illustration, this is not shown in the figure.

A communications standard that may be used in the wireless communications system includes but is not limited to a Global System for Mobile Communications (Global System of Mobile communication, GSM), Code Division Multiple Access (Code Division Multiple Access, CDMA) IS-95, Code Division Multiple Access (Code Division Multiple Access, CDMA) 2000, Time Division-Synchronous Code Division Multiple Access (Time Division-Synchronous Code Division Multiple Access, TD-SCDMA), Wideband Code Division Multiple Access (Wideband Code Division Multiple Access, WCDMA), Time Division Duplex-Long Term Evolution (Time Division Duplexing-Long Term Evolution, TDD LTE), Frequency Division Duplex-Long Term Evolution (Frequency Division Duplexing-Long Term Evolution, FDD LTE), Long Term Evolution-Advanced (Long Term Evolution-Advanced, LTE-advanced), personal handy-phone system (Personal Handy-phone System, PHS), Worldwide Interoperability for Microwave Access (Worldwide Interoperability for Microwave Access, WiMAX), and various evolved wireless communications standards in future.

The wireless communications system may be further a future evolved 5th Generation (the 5th Generation, 5G) wireless communications system.

The terminal device 301 may be a wireless terminal. The wireless terminal may be a device that provides a user with voice and/or data connectivity, a handheld device with a wireless connection function, or another processing device connected to a wireless modem. The wireless terminal may be a mobile terminal, such as a mobile phone (or referred to as a "cellular" phone) or a computer with a mobile terminal. For example, the wireless terminal may be a portable, pocket-sized, handheld, computer built-in, or in-vehicle mobile apparatus. For example, the wireless terminal may be a device such as a personal communications service (PCS, Personal Communications Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The access network device 302 may include a base station or a radio resource management device for controlling a base station, or may include a base station and a radio resource management device for controlling the base station. The base station may be a macro base station or a micro base station, such as a small cell (small cell) or a pico cell (pico cell). The base station may be a home base station, such as a home NodeB (Home NodeB, HNB) or a home evolved NodeB (Home eNodeB, HeNB). The base station may alternatively include a relay node (relay) and the like.

For example, for an LTE system such as TDD LTE, FDD LTE, or LTE-A, the access network device 302 in the wireless communications system provided in this application may be an evolved NodeB (evolved NodeB, eNodeB), and the terminal device 301 may be UE. For a TD-SCDMA system or a WCDMA system, the access network device 302 in the wireless communications system provided in this application may include a NodeB (NodeB) and/or a radio network controller (Radio Network Controller, RNC), and the terminal device 301 may be UE. For a GSM system, the access network device 302 provided in this application may include a base transceiver station (Base Transceiver Station, BTS) and/or a base station controller (Base Station Controller, BSC), and the terminal device 301 is a mobile station (Mobile Station, MS). For a Wi-Fi system, the access network device 302 may include an access point (Access Point, AP) and/or an access controller (Access Controller, AC), and the terminal device 301 may be a station (Station, STA). For another example, for a future evolved 5G system, the access network device 302 may be a node in an access network.

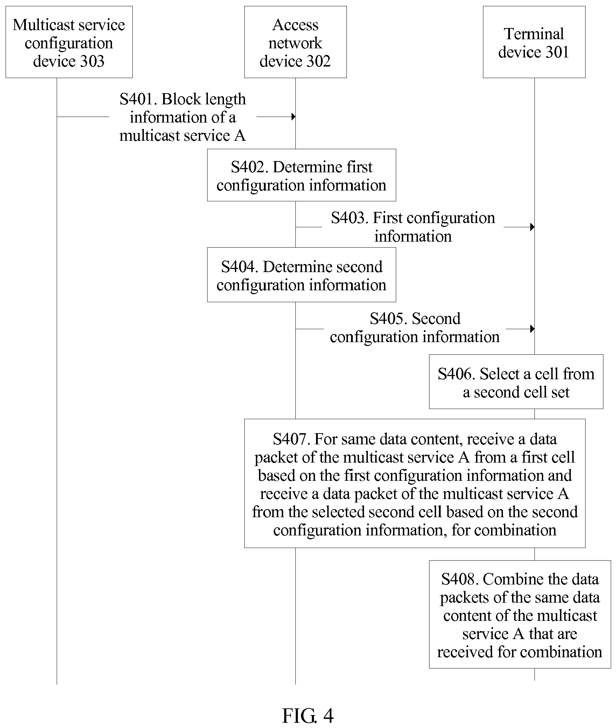

FIG. 4 is a flowchart of interaction among the multicast service configuration device 303, the access network device 302, and the terminal device 301.

In this procedure, a multicast service A is used as an example for description.

A cell in which the terminal device 301 is currently located is a first cell, and the first cell belongs to the access network device 302.

At least one second cell exists around the first cell, to constitute a second cell set. The second cell may be a neighboring cell of the first cell, for example, may be configured by the access network device 302 as a neighboring cell of the first cell.

In this procedure, the access network device 302 not only sends, to the terminal device 301, configuration information (referred to as "first configuration information") used to send the multicast service A in the first cell, but also sends, to the terminal device 301, configuration information (referred to as "second configuration information") used to send the multicast service A in each second cell. One piece of second configuration information is corresponding to one second cell.

In this way, the terminal device 301 can learn of not only a configuration of the multicast service A in the cell in which the terminal device 301 is located, but also a configuration of the multicast service A in another cell. Based on a learned configuration of the multicast service A in each cell, receiving and combination can be performed on the multicast service A, thereby effectively improving receiving quality of the multicast service A.

The procedure is described in detail below. The procedure includes the following steps.

S401. The multicast service configuration device 303 sends configuration information of the multicast service A to the access network device 302, and the access network device 302 sends a data packet of the multicast service in a cell of the access network device 302 based on the configuration information.

In this step, the multicast service configuration device 303 may further send the configuration information of the multicast service A to other access network devices, and each access network device that receives the configuration information sends the multicast service A based on the configuration information, so that terminal devices within coverage of the access network devices can perform receiving and combination on the multicast service A.

Optionally, the configuration information may include: block length information used to describe a length of a transport block used to send the multicast service A on an air interface. When the access network device that receives the configuration information transmits the multicast service A in all cells of the access network device, a length of each transport block used for sending is the length of the transport block described in the block length information.

S402. The access network device 302 determines the first configuration information.

S403. The access network device 302 sends the first configuration information in the first cell.

S404. The access network device 302 determines the second configuration information corresponding to each second cell in the second cell set.

Specifically, optionally, if the second cell does not belong to the access network device 302, the access network device 302 may obtain, by using an MCE, the second configuration information corresponding to the second cell, or obtain, by using an interface between the access network device 302 and an access network device to which the second cell belongs, the second configuration information corresponding to the second cell from the access network device to which the second cell belongs.

S405. The access network device 302 sends, in the first cell, the second configuration information corresponding to each second cell.

Whether in the first cell or the second cell, the configuration information that is of the multicast service A and that is determined by the access network device 302 may include one or more pieces of the following information:

### Information 1: a scheduling identifier of the multicast service A in a cell

The scheduling identifier is sent after being placed in scheduling information of the multicast service A, and is used by the terminal device 301 to learn that the multicast service A is scheduled in the cell.

For example, during implementation performed based on an SC-PTM technology, the scheduling identifier may be a G-RNTI, and the scheduling information may be DCI. Herein, a scheduling identifier used for the first cell is referred to as a "first scheduling identifier", and a scheduling identifier used for the second cell is referred to as a "second scheduling identifier".

### Information 2: a DRX parameter for a cell

The DRX parameter is used to describe how the multicast service A is discontinuously sent in the cell. The terminal device 301 performs discontinuous reception based on the DRX parameter.

It should be noted that, discontinuous sending of the multicast service A is not performed in each of the first cell and all cells in the second cell set. Therefore, the DRX parameter is not mandatory for all cells. Only a cell in which discontinuous sending is performed has a DRX parameter.

### Information 3: offset information of the multicast service A

The offset information of the multicast service A is used to describe a time deviation between a moment of sending the multicast service A in the second cell and a moment of sending the multicast service A in the first cell.

In a possible case, time synchronization is performed between a plurality of access network devices in the wireless communications system. If the multicast service A is synchronously sent in cells of the plurality of access network devices, the access network device 302 does not need to notify the terminal device 301 of the information.

In another possible case, the multicast service A is sent at an agreed time deviation in cells, and the terminal device 301 knows, in advance, a time deviation relationship between moments of sending the multicast service A in the cells. In this case, the access network device 302 does not need to notify the terminal device 301 of the information, either.

If the multicast service A is non-synchronously sent in all the cells, and the terminal device 301 cannot learn of the time deviation relationship between the moments of sending the multicast service A in all the cells, the access network device 302 needs to send the information to the terminal device 301.

### Information 4: information about a receiving threshold of the multicast service A

The information about the receiving threshold is used by the terminal device 301 to select, from the second cell set, second cells in which receiving and combination are to be performed on the multicast service A.

The configuration information sent by the access network device 302 in the first cell is not limited to the foregoing information. All information used by the terminal device 301 to receive the multicast service A can be sent to the terminal device 301 as configuration information. For example, the configuration information may further include service identifier information of the multicast service A, cell identifier information of the second cell, and the like.

The configuration information may be sent to the terminal device 301 on an MCCH. The configuration information may be sent to the terminal device 301 by using one or more messages.

There is no absolute sequence between steps S401, S402, and S404. For example, steps S402 and S403 may be first performed, and then steps S401, S404, and S405 are performed; or steps S404 and S405 may be performed first, then S402 and S403 are performed, and finally S401 is performed.

S406. The terminal device 301 selects, from the second cell set, second cells in which receiving and combination are to be performed.

The terminal device 301 may measure signals received from some or all second cells in the second cell set. The signal may be a reference signal, for example, a cell-specific reference signal (Cell-Specific Reference Signal, CRS).

The terminal device 301 selects, from the second cell set based on a measurement result, the second cells in which receiving and combination are to be performed on the multicast service. A manner in which the terminal device 301 selects the second cells may include but is not limited to the following manners.

### Manner 1: Select N cells with best measurement results.

In Manner 1, the terminal device 301 supports simultaneous receiving of the multicast service A from N neighboring cells, and N is a positive integer. In this case, the terminal device 301 may select, from the second cell set, the N cells as cells in which receiving and combination are to be performed on the multicast service A.

If the second cell set includes M cells, and the terminal device 301 measures P cells in the M cells and obtains P measurement results, where P is a positive integer not greater than M and greater than N, the terminal device 301 may select, from the P second cells, the first N second cells with best measurement results as cells in which receiving and combination are to be performed on the multicast service A.

### Manner 2: Select second cells based on a threshold.

Likewise, the terminal device 301 measures P cells in M cells and obtains P measurement results, and the terminal device 301 selects second cells whose measurement results are greater than a threshold as second cells in which receiving and combination are to be performed on the multicast service A.

The threshold may be preset in the terminal device 301, or may be determined by the terminal device 301 based on the information that is about the receiving threshold of the multicast service A and that is received in step S402.

S407. For same data content of the multicast service A, the terminal device 301 receives a data packet of the multicast service A from the first cell based on the first configuration information and receives, from the corresponding selected second cells in which receiving and combination are to be performed on the multicast service A, a data packet of the multicast service A based on the second configuration information, for combination.

As described above, if the data packets of the multicast service A are synchronously sent in the first cell and in the cells in the second cell set, the terminal device 301 may determine that the data packets simultaneously sent in the first cell and in the cells in the second cell set are data packets sent for same data content.

Alternatively, if the multicast service A is sent at an agreed time deviation in cells, and the terminal device 301 knows, in advance, a time deviation relationship between sending of the multicast service A in the cells, the terminal device 301 may determine that data packets that meet the time deviation relationship is data packets sent for same data content.

Alternatively, the multicast service A is non-synchronously sent in all cells, and the terminal device 301 receives the foregoing offset information from the access network device, and the offset information is used to describe a time deviation between a moment of sending the multicast service A in the second cell and a moment of sending the multicast service A in the first cell. The terminal device 301 determines, based on the offset information, a time deviation that is corresponding to the offset information and that is between a moment of sending a data packet in the second cell and a moment of sending a data packet in the first cell, where the data packets are of same data content of the multicast service A, and determines, based on the offset information, data packets of the same data content of the multicast service A from the data packets that are sent in the first cell and in the second cell corresponding to the offset information.

When receiving a data packet of the multicast service A from the first cell, the terminal device 301 may receive scheduling information from the first cell. When the scheduling information sent from the first cell includes the first scheduling identifier, the terminal device 301 learns that the multicast service A is scheduled in the first cell, and the terminal device 301 receives the data packet of the multicast service A from the first cell based on the scheduling information from the first cell.

Likewise, when receiving a data packet of the multicast service A from a second cell, the terminal device 301 may receive scheduling information from the second cell. When the scheduling information from the second cell includes the second scheduling identifier, the terminal device 301 learns that the multicast service A is scheduled in the second cell, and the terminal device 301 receives the data packet of the multicast service A from the second cell based on the scheduling information from the second cell.

If the first configuration information includes a discontinuous reception DRX parameter used to send the multicast service A in the first cell, when the terminal device 301 receives the data packet of the multicast service A from the first cell, the terminal device 301 may perform discontinuous reception on the data packet of the multicast service A from the first cell based on the DRX parameter used to send the multicast service A in the first cell.

If the second configuration information of the second cell includes a DRX parameter used to send the multicast service A in the second cell, when the terminal device 301 receives the data packet of the multicast service A from the second cell, the terminal device 301 may perform, based on the DRX parameter used to send the multicast service A in the second cell, discontinuous reception on the data packet that is of the multicast service A and that is sent from the second cell.

When the terminal device 301 receives data packets of the multicast service A for same data content of the multicast service A for combination, the terminal device may receive only a data packet of the multicast service A from the first cell based on the first configuration information, or separately receive, based on second configuration information of one or more second cells, only data packets of the multicast service A from the corresponding selected second cells in which receiving and combination are to be performed on the multicast service A; or the terminal device 301 receives the data packets of the multicast service A from both the first cell and the selected second cells in which receiving and combination are to be performed on the multicast service A.

Some optional manners of receiving, by the terminal device 301, the data packets of the same data content of the multicast service A for combination are provided below.

### Manner 1

The terminal device 301 receives the data packet of the multicast service A from the first cell for the same data content of the multicast service A based on the first configuration information.

The terminal device 301 decodes the data packet that is of the multicast service A and that is received from the first cell; and if the data packet is successfully decoded, the terminal device 301 stops receiving the data packets of the multicast service A from the corresponding selected second cells in which receiving and combination are to be performed on the multicast service A. Optionally, if the terminal device 301 fails to decode the data packet that is of the multicast service A and that is received from the first cell, the terminal device 301 receives the data packets of the multicast service A from the corresponding selected second cells in which receiving and combination are to be performed on the multicast service A.

For example, the terminal device 301 starts to receive a data packet from the second cell when the terminal device 301 receives a data packet from the first cell and attempts to decode the data packet. In this case, when succeeding in decoding the data packet received from the first cell, the terminal device 301 stops receiving a data packet from the second cell, and a received data packet may be discarded. When the terminal device 301 fails to decode the data packet received from the first cell, the terminal device 301 continues receiving a data packet from the second cell.

For another example, only after completing decoding of a data packet received from the first cell, the terminal device 301 determines, based on a decoding result, whether to receive a data packet from the second cell. If the data packet is successfully decoded, the terminal device 301 does not receive a data packet from the second cell. If the data packet fails to be decoded, the terminal device 301 receives a data packet from the second cell.

### Manner 2

The terminal device 301 receives a data packet of the multicast service A from a third cell for the same data content of the multicast service A.

The third cell is a cell that first sends the data packet of the same data content and that is in the first cell and the second cells, selected by the terminal device 301, in which receiving and combination are to be performed on the multicast service A.

The terminal device 301 decodes the data packet that is of the multicast service A and that is received from the third cell. If the data packet is successfully decoded, the terminal device 301 stops receiving a data packet of the multicast service A from another cell. The another cell is at least one cell in a plurality of cells including the first cell and the cells in the second cell set and excluding the third cell. Optionally, if the terminal device 301 fails to decode the data packet that is of the multicast service A and that is received from the third cell, the terminal device 301 receives the data packet of the multicast service A from the another cell.

For example, the terminal device 301 starts to receive a data packet from the another cell when the terminal device 301 receives a data packet from the third cell and attempts to decode the data packet. In this case, when succeeding in decoding the data packet received from the third cell, the terminal device 301 stops receiving a data packet from the another cell, and a received data packet may be discarded. When the terminal device 301 fails to decode the data packet received from the third cell, the terminal device 301 continues receiving a data packet from the another cell.

For another example, only after completing decoding of a data packet received from the third cell, the terminal device 301 determines, based on a decoding result, whether to receive a data packet from the another cell. If the data packet is successfully decoded, the terminal device 301 does not receive a data packet from the another cell. If the data packet fails to be decoded, the terminal device 301 receives a data packet from the another cell.

### Manner 3

The terminal device 301 receives the data packet of the multicast service A from the first cell for the same data content of the multicast service A based on the first configuration information.

The terminal device 301 receives the data packets of the multicast service A from the corresponding selected second cells in which receiving and combination are to be performed on the multicast service A.

S408. The terminal device 301 combines the data packets of the same data content of the multicast service A that are received for combination.

Optionally, the terminal device 301 may perform a HARQ combination on the data packets of the same data content of the multicast service A that are received for combination.

Two implementations of a HARQ combination technology are listed below.

### 1. Chase combining (Chase Combine, CC)

In a communication process, the terminal device may receive error data packets. Although the error data packets cannot be independently successfully decoded, the error packets still include specific information. The chase combining is to use the information, to be specific, store the received error data packets in the memory, and combine the error data packets and a retransmitted data packet for decoding, thereby improving transmission efficiency.

### 2. Incremental redundancy (Incremental Redundancy, IR)

An incremental redundancy (Incremental Redundancy, IR) technology is to send an information bit (bit) and some redundancy bits during initial transmission, and send an additional redundancy bit through retransmission (Retransmission). If decoding fails during the initial transmission, a channel coding rate may be reduced through retransmission of more redundancy bits, so as to improve a decoding success rate. If decoding still fails by using the further retransmitted redundancy bits, retransmission is performed again. As a quantity of retransmissions increases, redundancy bits continuously accumulate, and the channel coding rate continuously decreases, so that a better decoding effect can be achieved.

Alternatively, the terminal device 301 selects, from the data packets of the same data content of the multicast service A that are received for combination, a data packet that is successfully decoded.

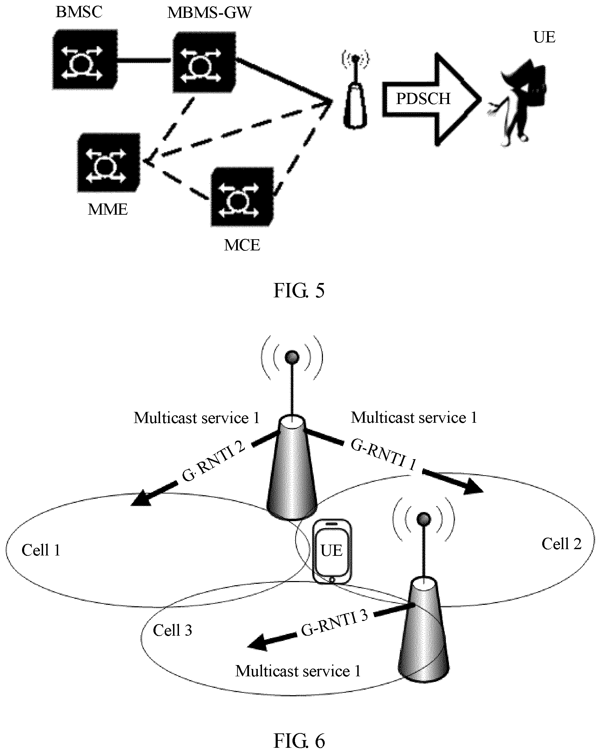

The procedure shown in FIG. 4 is further described below by using scenarios shown in FIG. 5 and FIG. 6 as an example.

Figure 5 shows an example of the wireless communications system shown in FIG. 3. A system shown in FIG. 5 includes:
a broadcast multicast service center (Broadcast Multicast Service Center, BMSC), configured to: enable a multicast service, send, to a mobility management entity (Mobility Management Entity, MME), a cell identifier of a cell in which a multicast service needs to be enabled, and send the cell identifier to an MCE (an example of the foregoing multicast service configuration device 303) by using the MME;
the MCE, configured to: after determining to enable transmission of the multicast service, send a notification to a base station (an example of the foregoing access network device 302), so as to instruct the base station to enable transmission of the multicast service;
a multimedia broadcast multicast service-gateway (Multimedia Broadcast Multicast Service-Gateway, MBMS-GW), configured to: receive data of the multicast service from the BMSC, and send the received data of the multicast service to the base station; and
the base station, configured to: add the data of the multicast service to a PDSCH, and send the data of the multicast service to UE. This embodiment of this application mainly relates to how to send configuration information of the multicast service to the UE (an example of the terminal device 301) after transmission of the multicast service is enabled.

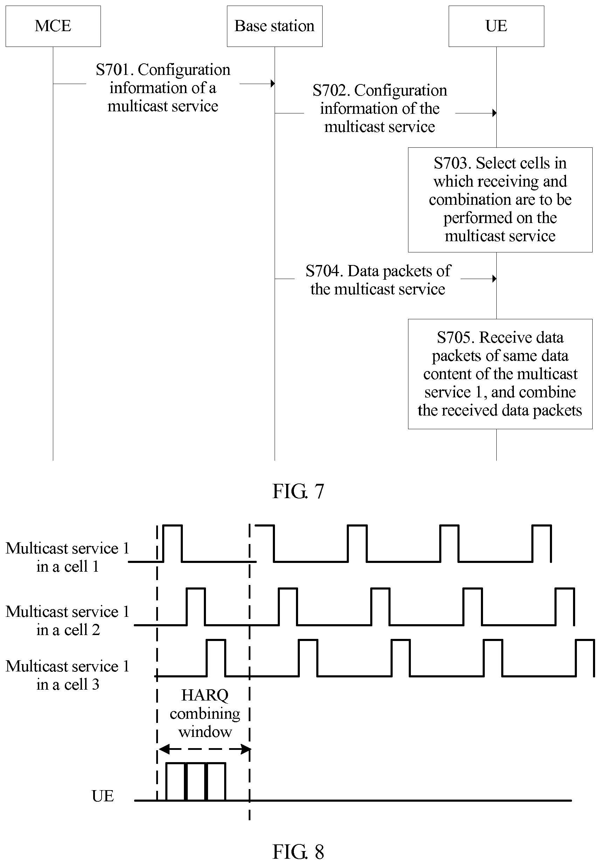

FIG. 7 is a flowchart of the example. As shown in FIG. 7, the procedure includes the following steps.

S701. The MCE sends configuration information of a multicast service 1 (an example of the foregoing multicast service A) to the base station.

The configuration information includes cell identifier information of a cell in which the multicast service 1 is sent, and may further include the foregoing block length information.

S702. The base station sends the configuration information (including the foregoing first configuration information and second configuration information) of the multicast service 1 to the UE by using the first cell.

The base station adds the configuration information to an SC-MCCH, and sends the configuration information to the UE.

The configuration information includes configuration information used to send the multicast service 1 in the first cell, including one or more pieces of the following information:
service identifier information of the multicast service 1, for example, a temporary mobile group identity (Temporary Mobile Group Identity, TMGI);
an RNTI used by the base station to schedule the multicast service 1 in the first cell, referred to as a "first G-RNTI" (an example of the foregoing first scheduling identifier); or
a DRX parameter used to transmit the multicast service 1 in the first cell.

The configuration information further includes configuration information used to transmit the multicast service 1 in a neighboring cell (the foregoing second cell), including one or more pieces of the following information:
cell identifier information of the neighboring cell;
an RNTI used to schedule the multicast service 1 in the neighboring cell, referred to as a "second G-RNTI" (an example of the foregoing second scheduling identifier);
offset information of the neighboring cell; and
a DRX parameter used to transmit the multicast service 1 in the neighboring cell.

S703. The UE selects cells in which receiving and combination are to be performed on the multicast service 1 (to be specific, selects cells from the foregoing second cell set).

The UE determines configuration information of neighboring cells supporting current transmission of the multicast service 1, measures the neighboring cells, and selects neighboring cells, as the cells in which receiving and combination are to be performed on the multicast service 1, whose measurement results are higher than a specific threshold (for example, the foregoing receiving threshold of the multicast service 1).

Referring to FIG. 6, the UE is located at an intersection of a cell 1, a cell 2, and a cell 3, in other words, located within a common coverage area, and a current serving cell is the cell 2. The multicast service 1 is scheduled in the cell 2 by using a G-RNTI 1, is scheduled in the cell 1 by using a G-RNTI 2, and is scheduled in the cell 3 by using a G-RNTI 3.

The UE knows, based on the configuration information that is of the multicast service 1 and that is sent by the base station (including the foregoing first configuration information and second configuration information), that the multicast service 1 is also sent in the cell 1 and the cell 3.

The UE measures the cell 1 and the cell 3. If measurement results of the cell 1 and the cell 3 are higher than a specific threshold (for example, the foregoing receiving threshold of the multicast service 1), the cell 1, the cell 2, and the cell 3 are used as cells in which receiving and combination are to be performed on the multicast service.

S704. The base station sends data packets of the multicast service to the UE.

The base station sends, in cells specified by a cell identifier sent by the MCE, the data packets of the multicast service to the UE, so that the UE receives the data packets of the multicast service for combination.

Optionally, if the MCE sends the foregoing block length information, the base station sends the data packets of the multicast service based on a length of a transport block specified in the block length information, so as to ensure that a same multicast service is transmitted in different cells by using transport blocks of the same length.

S705. The UE receives, by using the cells in which receiving and combination are to be performed on the multicast service and that are determined in step S703, data packets of same data content of the multicast service 1 that are sent from all the cells, and combines the received data packets.

Specifically, first, the UE receives, based on configuration information of the cell 2 (an example of the foregoing first configuration information), a data packet that is of the same data content of the multicast service 1 and that is sent in the cell 2, and then the UE separately receives, based on configuration information of the cell 1 and the cell 3 (an example of the foregoing second configuration information), data packets of the same data content of the multicast service 1 that are sent in the cell 1 and the cell 3.

Optionally, if the data packet received by the UE in the cell 2 is correctly read, the UE stops receiving the data packets sent in the cell 1 and the cell 3.

Optionally, the UE may determine the data packets of the same data content based on the offset information of the cell 1 and the cell 3 sent by the base station in step S702, and combine the data packets of the same content.

The UE determines, based on offset information of the service in neighboring cells relative to a current cell, data packets that need to be combined, and performs a combination.

The UE may perform a HARQ combination on a plurality of received data packets, or the UE may perform a selective combination on a plurality of received data packets, to be specific, select a successfully decoded data packet from the plurality of received data packets.

For an example of the HARQ combination, refer to FIG. 8. The UE combines, in a HARQ combining window, the data packets of the multicast service 1 that are received from the cell 1, the cell 2, and the cell 3, and the UE determines, based on the offset information of the cell 1 and the cell 3, that the data packets are of the same data content.

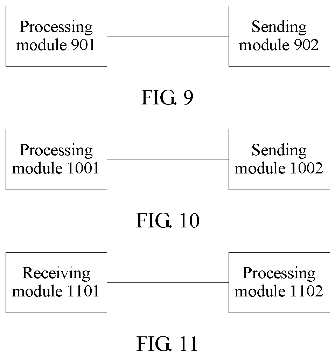

FIG. 9 is a schematic structural diagram of an access network device according to an embodiment of this application. As shown in FIG. 9, the access network device includes:
a processing module 901, configured to determine first configuration information, where the first configuration information includes configuration information used to send a multicast service in a first cell; and
a sending module 902, configured to send the first configuration information in the first cell.

The processing module 901 is further configured to determine second configuration information of each second cell in a second cell set, where the second configuration information includes configuration information used to send the multicast service in the second cell.

The sending module 902 is further configured to send, in the first cell, the second configuration information of each second cell in the second cell set, where the second configuration information is also used by a terminal device in the first cell to receive the multicast service.

For another optional implementation of the access network device, refer to the foregoing access network device 302. The processing module 901 is configured to implement a processing operation of the access network device 302, and the sending module 902 may be configured to implement a sending operation of the access network device 302. Optionally, the access network device 302 may further include a receiving module, configured to receive information including a data packet, control information, and the like. Optionally, if the access network device 302 includes the receiving module, the receiving module and the sending module 902 may be located in a same transceiver module.

The processing module 901 may be implemented by a processor. The processor may include one or more central processing units (Central Processing Unit, CPU), or may include one or more digital signal processors (Digital Signal Processor, DSP). The sending module 902 may be implemented by a transmitter. If the access network device includes the receiving module, and the receiving module and the sending module 902 are located in the same transceiver module, the sending module 902 may be implemented by a transceiver.

FIG. 10 is a schematic structural diagram of a multicast service configuration device according to an embodiment of this application. As shown in FIG. 10, the multicast service configuration device includes:
a processing module 1001, configured to determine block length information of a multicast service, where the block length information is used to describe a length of a transport block used to send the multicast service on an air interface; and
a sending module 1002, configured to send the block length information to an access network device.

For another optional implementation of the multicast service configuration device, refer to the foregoing multicast service configuration device 303. The processing module 1001 may be configured to implement a processing operation of the multicast service configuration device 303, and the sending module 1002 may be configured to implement a sending operation of the multicast service configuration device 303.

The processing module 1001 may be implemented by a processor. The processor may include one or more CPUs, or may include one or more DSPs. The sending module 1002 may be implemented by a transmitter.

FIG. 11 is a schematic structural diagram of a terminal device according to an embodiment of this application. As shown in FIG. 11, the terminal device includes:
a receiving module 1101, configured to receive first configuration information and second configuration information of each second cell in a second cell set that are from an access network device, where
the first configuration information includes configuration information used to send a multicast service in a first cell, and the second configuration information includes configuration information used to send the multicast service in the second cell; and
a processing module 1102, configured to select, from the second cell set, a second cell from which the multicast service is to be received.

The receiving module 1101 is further configured to: for same data content of the multicast service, receive a data packet of the multicast service from the first cell based on the first configuration information, and receive, from the selected second cell from which the multicast service is to be received, a data packet of the multicast service based on the second configuration information.

The processing module 1102 is further configured to combine the data packets of the same data content of the multicast service that are received by the receiving module 1101.

For another optional implementation of the terminal device, refer to the foregoing terminal device 301. The processing module 1102 is configured to implement a processing operation of the terminal device 301, and the receiving module 1101 may be configured to implement a receiving operation of the terminal device 301. Optionally, the terminal device 301 may further include a sending module, configured to send information including a data packet, control information, and the like. Optionally, if the terminal device 301 includes the sending module, the sending module and the receiving module 1101 may be located in a same transceiver module.

The processing module 1102 may be implemented by a processor. The processor may include one or more CPUs, or may include one or more DSPs. The receiving module 1101 may be implemented by a receiver. If the terminal device 301 includes the sending module, and the sending module and the receiving module 1101 are located in the same transceiver module, the receiving module 1101 may be implemented by a transceiver.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of this application without departing from the spirit and scope of the embodiments of the present invention. The present invention is intended to cover these modifications and variations provided that they fall within the scope of protection defined by the following claims of the present invention and their equivalent technologies.

## Claims

1. A terminal device, wherein the terminal device has accessed a first cell, and comprises:
a receiving module, configured to receive first configuration information and second configuration information of each second cell in a second cell set that are from an access network device, wherein
the first configuration information comprises configuration information used to send a multicast service in the first cell, and the second configuration information comprises configuration information used to send the multicast service in the second cell; and
a processing module, configured to select, from the second cell set, a second cell from which the multicast service is to be received, wherein
the receiving module is further configured to: for same data content of the multicast service, receive a data packet of the multicast service from the first cell based on the first configuration information, and receive, from the selected second cell from which the multicast service is to be received, a data packet of the multicast service based on the second configuration information; and
the processing module is further configured to combine the data packets of the same data content of the multicast service that are received by the receiving module.

2. The terminal device according to claim 1, wherein the receiving module is specifically configured to:
receive the data packet of the multicast service from the first cell for the same data content of the multicast service based on the first configuration information; and/or
receive, from the selected second cell from which the multicast service is to be received, the data packet of the multicast service for the same data content of the multicast service based on the second configuration information.

3. The terminal device according to claim 2, wherein
the receiving module is specifically configured to receive the data packet of the multicast service from the first cell for the same data content of the multicast service based on the first configuration information;
the processing module is further configured to decode the data packet that is of the multicast service and that is received by the receiving module from the first cell; and
the receiving module is specifically configured to: if the processing module succeeds in decoding the data packet, stop receiving the data packet of the multicast service from the selected second cell from which the multicast service is to be received.

4. The terminal device according to claim 3, wherein the receiving module is further configured to:
if the processing module fails to decode the data packet that is of the multicast service and that is received by the receiving module from the first cell, receive the data packet of the multicast service from the selected second cell from which the multicast service is to be received.

5. The terminal device according to claim 2, wherein
the receiving module is specifically configured to receive a data packet of the multicast service from a third cell for the same data content of the multicast service, wherein
the third cell is a cell that first sends the data packet of the same data content and that is in the first cell and the second cell, selected by the terminal device, from which the multicast service is to be received;
the processing module is further configured to decode the data packet that is of the multicast service and that is received by the receiving module from the third cell; and
the receiving module is specifically configured to: if the processing module succeeds in decoding the data packet, stop receiving a data packet of the multicast service from another cell, wherein
the another cell is at least one cell in a plurality of cells comprising the first cell and the second cell in the second cell set and excluding the third cell.

6. The terminal device according to claim 5, wherein the receiving module is further configured to:
if the processing module fails to decode the data packet that is of the multicast service and that is received by the receiving module from the third cell, receive the data packet of the multicast service from the another cell.

7. The terminal device according to any one of claims 2 to 6, wherein
the first configuration information comprises a first scheduling identifier of the multicast service; the receiving module is further configured to receive scheduling information from the first cell; the processing module is further configured to: when the scheduling information from the first cell comprises the first scheduling identifier, learn that the multicast service is scheduled in the first cell; and the receiving module is specifically configured to receive the data packet of the multicast service from the first cell based on the scheduling information from the first cell; and
the second configuration information comprises a second scheduling identifier of the multicast service; the receiving module is further configured to receive scheduling information from the second cell; the processing module is further configured to: when the scheduling information from the second cell comprises the second scheduling identifier, learn that the multicast service is scheduled in the second cell; and the receiving module is specifically configured to receive the data packet of the multicast service from the second cell based on the scheduling information from the second cell.

8. The terminal device according to claim 7, wherein
the first configuration information further comprises a discontinuous reception DRX parameter used to send the multicast service in the first cell; and the receiving module is specifically configured to discontinuously receive the data packet of the multicast service from the first cell based on the DRX parameter used to send the multicast service in the first cell; and/or
the second configuration information further comprises a DRX parameter used to send the multicast service in the second cell; and the receiving module is specifically configured to discontinuously receive the data packet of the multicast service from the second cell based on the DRX parameter used to send the multicast service in the second cell.

9. The terminal device according to any one of claims 1 to 8, wherein the processing module is specifically configured to:
measure a reference signal received by the receiving module from at least one second cell in the second cell set; and
select, from the second cell set based on a measurement result, the second cell from which the multicast service is to be received.

10. The terminal device according to claim 9, wherein
the receiving module is further configured to: before the second cell from which the multicast service is to be received is selected from the second cell set, receive information that is from the access network device and that is used to indicate a receiving threshold of the multicast service;
the processing module is further configured to determine the receiving threshold of the multicast service based on the information used to indicate the receiving threshold of the multicast service; and
the processing module is specifically configured to select, from the at least one second cell, a second cell whose measurement result is higher than the receiving threshold of the multicast service as the second cell from which the multicast service is to be received.

11. The terminal device according to any one of claims 1 to 10, wherein the processing module is specifically configured to:
perform a HARQ combination on the data packets of the same data content of the multicast service that are received by the receiving module; or
select, from the data packets of the same data content of the multicast service that are received by the receiving module, a data packet that is successfully decoded.

12. The terminal device according to any one of claims 1 to 11, wherein the processing module is further configured to:
before the receiving module receives the data packet of the multicast service, determine that data packets simultaneously sent in the first cell and in the second cell in the second cell set are data packets sent for same data content.

13. The terminal device according to any one of claims 1 to 11, wherein
the receiving module is further configured to: before receiving the data packet of the multicast service, receive, from the access network device, offset information of the multicast service for the selected second cell from which the multicast service is to be received, wherein the offset information is used to describe a time deviation between a moment of sending a data packet in the second cell and a moment of sending a data packet in the first cell, wherein the data packets are of same data content of the multicast service; and
the processing module is further configured to determine, based on the offset information, the data packets of the same data content of the multicast service that are sent in the first cell and the second cell corresponding to the time deviation described in the offset information.

14. An access network device, comprising:
a processing module, configured to determine first configuration information, wherein the first configuration information comprises configuration information used to send a multicast service in a first cell; and
a sending module, configured to send the first configuration information in the first cell, wherein
the processing module is further configured to determine second configuration information of each second cell in a second cell set, wherein the second configuration information comprises configuration information used to send the multicast service in the second cell; and
the sending module is further configured to send, in the first cell, the second configuration information of each second cell in the second cell set, wherein the second configuration information is also used by a terminal device in the first cell to receive the multicast service.

15. The access network device according to claim 14, wherein
the first configuration information comprises a first scheduling identifier of the multicast service;
the first scheduling identifier is sent after being placed in scheduling information when the multicast service is scheduled in the first cell, and is used by the terminal device in the first cell to learn that the multicast service is scheduled in the first cell;
the second configuration information comprises a second scheduling identifier of the multicast service; and
the second scheduling identifier is sent after being placed in scheduling information when the multicast service is scheduled in the second cell, and is used by the terminal device in the first cell to learn that the multicast service is scheduled in the second cell.

16. The access network device according to claim 15, wherein
the first configuration information further comprises a discontinuous reception DRX parameter used to send the multicast service in the first cell; and/or
the second configuration information further comprises a DRX parameter used to send the multicast service in the second cell.

17. The access network device according to any one of claims 14 to 16, wherein
the sending module is further configured to send offset information of the multicast service for at least one second cell in the second cell set; and
the offset information is used to describe a time deviation between a moment of sending the multicast service in the second cell and a moment of sending the multicast service in the first cell.

18. The access network device according to any one of claims 14 to 17, further comprising a receiving module, configured to receive block length information from a multicast service configuration device, wherein the block length information is used to describe a length of a transport block used to send the multicast service on an air interface, wherein
when the multicast service is sent in the first cell and in each second cell in the second cell set, a length of each transport block is the length of the transport block described in the block length information.

19. The access network device according to any one of claims 14 to 18, wherein
the sending module is further configured to send, in the first cell, information used to indicate a receiving threshold of the multicast service; and
the receiving threshold of the multicast service is used by the terminal device in the first cell to select, from the second cell set, a second cell from which the multicast service is to be received.

20. A multicast service receiving method, comprising:
receiving, by a terminal device in a first cell from an access network device, first configuration information and second configuration information corresponding to each second cell in a second cell set, wherein
the first configuration information comprises configuration information used to send a multicast service in the first cell, and the second configuration information comprises configuration information used to send the multicast service in the second cell;
selecting, by the terminal device from the second cell set, a second cell from which the multicast service is to be received, wherein
for same data content of the multicast service, receiving, by the terminal device, a data packet of the multicast service from the first cell based on the first configuration information, and receiving, from the corresponding selected second cell from which the multicast service is to be received, a data packet of the multicast service based on the second configuration information; and
combining, by the terminal device, the received data packets of the same data content of the multicast service.

21. The method according to claim 20, wherein the receiving, by the terminal device, a data packet of the multicast service comprises:
receiving, by the terminal device, the data packet of the multicast service from the first cell for the same data content of the multicast service based on the first configuration information; and/or
receiving, by the terminal device from the corresponding selected second cell from which the multicast service is to be received, the data packet of the multicast service for the same data content of the multicast service based on the second configuration information.

22. The method according to claim 21, wherein the receiving, by the terminal device, a data packet of the multicast service comprises:
receiving, by the terminal device, the data packet of the multicast service from the first cell for the same data content of the multicast service based on the first configuration information; and
decoding, by the terminal device, the data packet that is of the multicast service and that is received from the first cell; and if the data packet is successfully decoded, stopping receiving the data packet of the multicast service from the corresponding selected second cell from which the multicast service is to be received.

23. The method according to claim 22, further comprising:
if the terminal device fails to decode the data packet that is of the multicast service and that is received from the first cell, receiving, by the terminal device, the data packet of the multicast service from the selected second cell from which the multicast service is to be received.

24. The method according to claim 21, wherein the receiving, by the terminal device, a data packet of the multicast service comprises:
receiving, by the terminal device, a data packet of the multicast service from a third cell for the same data content of the multicast service, wherein
the third cell is a cell that first sends the data packet of the same data content and that is in the first cell and the second cell, selected by the terminal device, from which the multicast service is to be received; and
decoding, by the terminal device, the data packet that is of the multicast service and that is received from the third cell; and if the data packet is successfully decoded, stopping receiving a data packet of the multicast service from another cell, wherein
the another cell is at least one cell in a plurality of cells comprising the first cell and the cell in the second cell set and excluding the third cell.

25. The method according to claim 24, further comprising:
if the terminal device fails to decode the data packet that is of the multicast service and that is received from the third cell, receiving, by the terminal device, the data packet of the multicast service from the another cell.

26. The method according to any one of claims 21 to 25, wherein
the first configuration information comprises a first scheduling identifier of the multicast service; and the receiving, by the terminal device, a data packet of the multicast service from the first cell based on the first configuration information comprises:
receiving, by the terminal device, scheduling information from the first cell; when the scheduling information from the first cell comprises the first scheduling identifier, learning that the multicast service is scheduled in the first cell; and receiving, by the terminal device, the data packet of the multicast service from the first cell based on the scheduling information from the first cell; and
the second configuration information comprises a second scheduling identifier of the multicast service; and the receiving, by the terminal device from the corresponding selected second cell from which the multicast service is to be received, a data packet of the multicast service based on the second configuration information comprises:
receiving, by the terminal device, scheduling information from the second cell; when the scheduling information from the second cell comprises the second scheduling identifier, learning that the multicast service is scheduled in the second cell; and receiving, by the terminal device, the data packet of the multicast service from the second cell based on the scheduling information from the second cell.

27. The method according to claim 26, wherein
the first configuration information further comprises a discontinuous reception DRX parameter used to send the multicast service in the first cell; and the receiving, by the terminal device, the data packet of the multicast service from the first cell based on the scheduling information from the first cell comprises: discontinuously receiving, by the terminal device, the data packet of the multicast service from the first cell based on the DRX parameter used to send the multicast service in the first cell; and/or
the second configuration information further comprises a DRX parameter used to send the multicast service in the second cell; and the receiving, by the terminal device, the data packet of the multicast service from the second cell based on the scheduling information from the second cell comprises: discontinuously receiving, by the terminal device, the data packet of the multicast service from the second cell based on the DRX parameter used to send the multicast service in the second cell.

28. The method according to any one of claims 20 to 27, wherein the selecting, by the terminal device from the second cell set, a second cell from which the multicast service is to be received comprises:
measuring, by the terminal device, signals received from some or all second cells in the second cell set; and
selecting, by the terminal device from the second cell set based on a measurement result, the second cell from which the multicast service is to be received.

29. The method according to claim 28, wherein
before the selecting, by the terminal device from the second cell set, a second cell from which the multicast service is to be received, the method further comprises:
receiving, by the terminal device, information that is from the access network device and that is used to indicate a receiving threshold of the multicast service; and determining, by the terminal device, the receiving threshold of the multicast service based on the information used to indicate the receiving threshold of the multicast service; and
the selecting, by the terminal device from the second cell set based on a measurement result, the second cell from which the multicast service is to be received comprises:
selecting, by the terminal device, from the at least one second cell, a second cell whose measurement result is higher than the receiving threshold of the multicast service as the second cell from which the multicast service is to be received.

30. The method according to any one of claims 20 to 29, wherein the combining, by the terminal device, the received data packets of the same data content of the multicast service comprises:
performing, by the terminal device, a HARQ combination on the received data packets of the same data content of the multicast service; or
selecting, by the terminal device from the received data packets of the same data content of the multicast service, a data packet that is successfully decoded.

31. The method according to any one of claims 20 to 30, before the receiving, by the terminal device, a data packet of the multicast service, further comprising:
determining, by the terminal device, that data packets simultaneously sent in the first cell and in the cell in the second cell set are data packets sent for same data content.

32. The method according to any one of claims 20 to 30, before the receiving, by the terminal device, a data packet of the multicast service, further comprising:
receiving, by the terminal device from the access network device, offset information of the multicast service for the selected second cell from which the multicast service is to be received, wherein the offset information is used to describe a time deviation between a moment of sending a data packet in the corresponding second cell and a moment of sending a data packet in the first cell, wherein the data packets are of same data content of the multicast service; and
determining, by the terminal device based on the offset information, the data packets of the same data content of the multicast service that are sent in the first cell and the second cell corresponding to the offset information.

33. A multicast service configuration method, comprising:
determining, by an access network device, first configuration information, wherein the first configuration information comprises configuration information used to send a multicast service in a first cell;
sending, by the access network device, the first configuration information in the first cell;
determining, by the access network device, second configuration information corresponding to each second cell in a second cell set, wherein the second configuration information comprises configuration information used to send the multicast service in the second cell; and
sending, by the access network device in the first cell, the second configuration information corresponding to each second cell in the second cell set.

34. The method according to claim 33, wherein
the first configuration information comprises a first scheduling identifier of the multicast service;
the first scheduling identifier is sent after being placed in scheduling information when the multicast service is scheduled in the first cell, and is used by a terminal device in the first cell to learn that the multicast service is scheduled in the first cell;
the second configuration information comprises a second scheduling identifier of the multicast service; and
the second scheduling identifier is sent after being placed in scheduling information when the multicast service is scheduled in the second cell, and is used by the terminal device in the first cell to learn that the multicast service is scheduled in the second cell.

35. The method according to claim 34, wherein
the first configuration information further comprises a discontinuous reception DRX parameter used to send the multicast service in the first cell; and/or
the second configuration information further comprises a DRX parameter used to send the multicast service in the second cell.

36. The method according to any one of claims 33 to 35, further comprising: sending, by the access network device, offset information of the multicast service for at least one second cell in the second cell set, wherein
the offset information is used to describe a time deviation between a moment of sending the multicast service in the second cell and a moment of sending the multicast service in the first cell.

37. The method according to any one of claims 33 to 36, further comprising:
receiving, by the access network device, block length information from a multicast service configuration device, wherein the block length information is used to describe a length of a transport block used to send the multicast service on an air interface, wherein
when the multicast service is sent in the first cell and in each second cell in the second cell set, a length of each transport block is the length of the transport block described in the block length information.

38. The method according to any one of claims 33 to 37, further comprising:
sending, by the access network device in the first cell, information used to indicate a receiving threshold of the multicast service, wherein
the receiving threshold of the multicast service is used by the terminal device in the first cell to select, from the second cell set, a second cell from which the multicast service is to be received.

39. A wireless communications system, comprising:
an access network device, configured to: send the first configuration information in a first cell, and send, in the first cell, the second configuration information corresponding to each second cell in a second cell set, wherein
the first configuration information comprises configuration information used to send a multicast service in the first cell, and the second configuration information comprises configuration information used to send the multicast service in the second cell; and
a terminal device, having accessed the first cell and configured to: receive the first configuration information and the second configuration information corresponding to each second cell in the second cell set; select, from the second cell set, a second cell from which the multicast service is to be received; for same data content of the multicast service, receive a data packet of the multicast service from the first cell based on the first configuration information, and receive, from the corresponding selected second cell from which the multicast service is to be received, a data packet of the multicast service based on the second configuration information; and combine the received data packets of the same data content of the multicast service.
